# DEMANDE DE BREVET EUROPEEN

(11) **EP 3 252 718 A2**
(43) Date de publication de la demande: **06.12.2017**
(21) Numéro de dépôt: 17174080.6
(22) Date de dépôt: 01.06.2017
(51) Int. Cl.: G07C 3/00, G07C 5/00, B67C 3/02

(54) **MACHINE DE REMPLISSAGE OU DE TEST D'UN RÉCIPIENT, OU ADAPTATEUR POUR CONNECTER LA MACHINE AU RÉCIPIENT**

(30) Priorité: 01.06.2016 FR 1654959
(71) Demandeur: Fives Filling & Sealing, 44140 Le Bignon (FR)
(72) Inventeur: GALL, Dominique, 44140 Le Bignon (FR)
(74) Mandataire: Lavoix

(57) **Abrégé**

Machine (3) de remplissage ou de test d'un récipient, ou adaptateur (2) pour connecter la machine au récipient, comprenant un dispositif (1) de gestion de maintenance intégré dans la machine ou dans l'adaptateur, en particulier sur une chaîne de fabrication automobile. Le dispositif comprend :
- un module de détection (41) adapté pour détecter un déclenchement et/ou un arrêt de l'adaptateur ou de la machine,
- une interface de communication (43), et
- un serveur (44) web hébergeant au moins une page web (5) accessible via l'interface de communication et adaptée pour afficher au moins un paramètre représentatif d'une utilisation cumulée de l'adaptateur ou de la machine.

Le paramètre est destiné à être calculé par un module de calcul (42) connecté au module de détection.

## Description

La présente invention concerne la gestion de la maintenance d'appareils de remplissage de fluides utilisés notamment dans les chaînes d'assemblage automobile.

Plus particulièrement, la présente invention concerne une machine de remplissage ou de test d'un récipient, ou un adaptateur pour connecter la machine au récipient. Elle concerne aussi un système et un procédé pour gérer la maintenance de machines de remplissage ou de test d'un récipient, ou d'adaptateurs connectant la machine au récipient.

Dans les chaînes d'assemblage d'automobiles, différents réservoirs ou circuits sont testés et remplis de fluides nécessaires au fonctionnement des automobiles. Des machines de remplissage réalisent ces fonctions pour un ou plusieurs fluides. Des adaptateurs spécifiques se connectent aux circuits fluidiques, souvent de façon étanche, via des connexions automatiques ou manuelles, intégrant des éléments hydrauliques et pneumatiques, de façon à assurer une liaison fluidique entre la machine de remplissage et les circuits fluidiques à remplir ou à tester. Un opérateur connecte et déconnecte les adaptateurs à chaque passage de véhicule. Les adaptateurs sont robustes, légers, et ergonomiques.

Les adaptateurs et les machines de remplissage ou de test sont des équipements qui ont des taux d'utilisation élevés avec de fortes cadences et utilisent souvent des produits corrosifs ou/et encrassant. Leur utilisation dans des chaînes d'assemblage en continu suppose que ces équipements soient robustes, mais également bien entretenus. Les constructeurs de ces équipements fournissent donc à leurs clients des programmes de maintenance à respecter suivant un nombre de cycles effectués par ces équipements ou un temps d'utilisation de ces équipements. Ces opérations de maintenance garantissent le bon fonctionnement et la longévité de l'adaptateur ou de la machine, évitant ainsi les pertes d'exploitations générées par les arrêts non souhaités de la chaîne d'assemblage.

Le suivi des opérations de maintenance est souvent problématique et demande une organisation méthodique. En effet, le nombre d'équipements, en production ou en réserve, peut être important dans une usine d'assemblage, et une bonne traçabilité des équipements doit être obtenue pour assurer la bonne réalisation des opérations de maintenance. Le nombre d'intervenants dans les opérations de maintenance augmente également les risques d'erreur dans le suivi de la maintenance.

Les opérations de maintenance des équipements sont complexes et supposent d'avoir accès à des carnets d'entretien ou des modes d'emploi spécifiques à chaque adaptateur ou à chaque machine de remplissage ou de test. Une gestion des différents documents de maintenance est réalisée, ce qui n'est pas toujours aisé sur une chaîne d'assemblage. Le nombre de références d'équipements complique aussi la gestion documentaire et sa mise à jour.

Pour déterminer si des équipements ont atteint le seuil de leur maintenance, un nombre de cycles ou un temps d'utilisation peuvent être comptabilisés par des compteurs électroniques qui alertent l'opérateur lorsqu'une valeur prédéfinie de nombre de cycles d'utilisation est atteinte. Ensuite, l'opérateur détermine quel type de maintenance est à réaliser, et comment la réaliser, ce qui est complexe.

Un but de l'invention est donc de simplifier la gestion de la maintenance des machines de remplissage et de test, ou des adaptateurs, tout en garantissant le respect des procédures de maintenance, la mise à jour de ces procédures et un suivi des étapes clés de maintenance.

A cet effet, l'invention concerne une machine de remplissage ou de test d'un récipient, ou un adaptateur pour connecter la machine au récipient selon la revendication 1.

Selon des modes particuliers de réalisation, la machine ou l'adaptateur comprend l'une ou plusieurs des caractéristiques correspondant aux revendications 2 à 6, prise(s) isolément ou selon toutes les combinaisons techniquement possibles.

L'invention concerne aussi un système de gestion de maintenance selon la revendication 7, ou, dans un mode particulier de réalisation, selon la revendication 8

L'invention concerne aussi un procédé de gestion de maintenance selon la revendication 9.

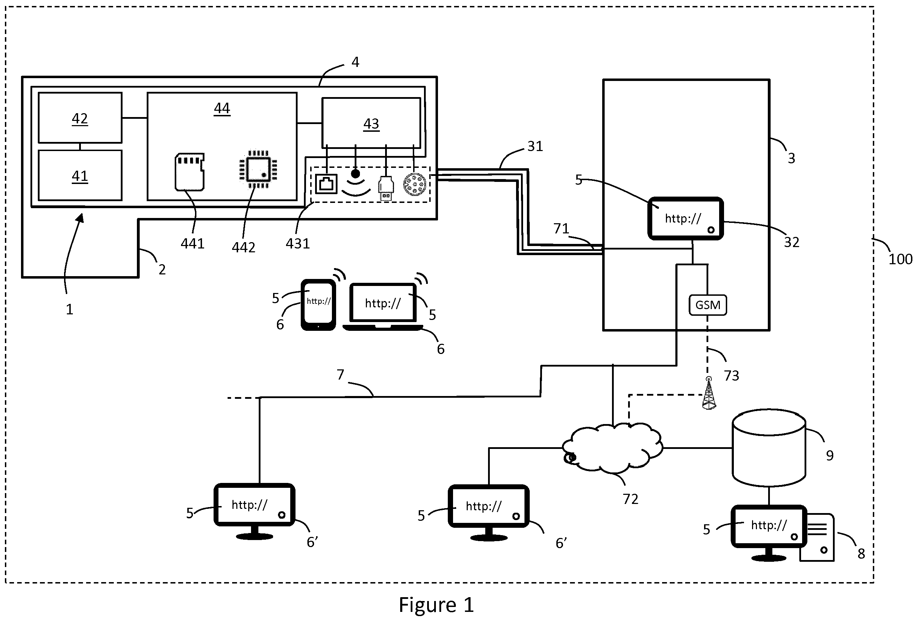

Les caractéristiques et avantages de l'invention apparaîtront à la lecture de la description qui va suivre, donnée uniquement à titre d'exemple, et non limitative, en référence au dessin annexé, sur lequel la figure est une représentation schématique d'un système selon l'invention, incluant un dispositif selon l'invention, et dont le fonctionnement illustre un procédé selon l'invention.

En référence à la figure unique, on décrit un système 100 selon l'invention, par exemple situé dans une chaîne de montage (non représentée) de véhicules automobiles (non représentés).

En variante, le système 100 s'applique à tout secteur industriel nécessitant des tests et/ou un remplissage d'un circuit fluidique par le transfert de fluides, notamment au secteur de l'énergie pour le remplissage de pompes à chaleur.

Le système 100 comporte une machine 3 de remplissage ou de test d'un récipient (non représenté), un adaptateur 2 pour connecter la machine au récipient, et un dispositif 1 de gestion de la maintenance intégré dans l'adaptateur 2.

Par « récipient », on entend ici tout contenant destiné à recevoir un fluide ou à être tester en étanchéité, tel qu'un réservoir, une canalisation ou une tuyauterie.

Selon une variante non représentée, le dispositif 1 se situe dans la machine 3 au lieu d'être dans l'adaptateur 2. Ceci ne modifie pas le fonctionnement et les avantages du dispositif 1.

Le dispositif 1 comprend une carte électronique 4 qui comporte un module de détection 41 pour détecter un déclenchement et/ou un arrêt de l'adaptateur 2 (c'est-à-dire par exemple, le démarrage d'un cycle de remplissage). La carte électronique 4 comporte aussi un module de calcul 42 pour calculer au moins un paramètre représentatif d'une utilisation cumulée de l'adaptateur 2, un serveur web 44, accessible par son URL (en anglais *Uniform Resource Locator*) ou son adresse web, et une interface de communication 43. Par serveur web 44, on entend tout type de serveur informatique ou logiciel permettant de stocker et publier des données vers des dispositifs d'affichage génériques ou propriétaires.

Le paramètre représente par exemple un nombre de cycles de remplissage ou de test, ou une durée d'utilisation cumulée.

Le module de détection 41 est par exemple sensible à l'actionnement d'un bouton de démarrage et d'arrêt du cycle de remplissage par un opérateur (non représenté). Le module de détection 41 est complété par le module de calcul 42.

Dans l'exemple représenté, le module de calcul 42 se situe dans le dispositif 1.

Selon une variante non représentée, le module de calcul 42 se trouve à distance, à l'extérieur du dispositif 1 et même de l'adaptateur 2, par exemple dans un serveur de réseau 8.

Le module de calcul 42 additionne les détections d'utilisation faites par le module de détection 41 pour obtenir une somme des utilisations de l'adaptateur 2. Dans l'exemple de réalisation de l'invention, le module de détection 41 et le module de calcul 42 sont dans (ou sur) la carte électronique 4, mais peuvent être, selon une variante non représentée, situés ailleurs dans l'adaptateur 2, tout en restant connectés à la carte électronique 4.

Selon un autre mode de réalisation (non représenté) de l'invention, le module de calcul 42 est situé au sein du serveur web 44.

Les données d'utilisation de l'adaptateur 2 sont transmises au serveur web 44 qui comprend usuellement un processeur 442 et de la mémoire 441. Le serveur web 44 héberge au moins une page web 5. La page web 5 est consultable à l'aide d'un navigateur web. La page web 5 peut être conçue avec des langages de programmation et des formats de présentation connus notamment html, xhtml, javascript, PHP...

Cette page web 5 permet notamment d'afficher les informations recueillies par les modules 41, 42 ou fournies par le serveur web 44, et des informations enregistrées provenant d'autres sources. Habituellement, une page web peut afficher une grande quantité d'information dans différentes zones ou bien cette information peut être répartie sur plusieurs pages web. Dans la suite de la présentation de l'invention, on parlera de page web 5 pour désigner une ou plusieurs pages web, également appelés site web. Généralement, la page web 5 est stockée au niveau du processeur 442 du serveur web 44 et les données sont stockées sur la mémoire 441. L'invention couvre aussi les autres possibilités de répartition entre ces deux éléments 441 et 442. La mémoire 441 est par exemple amovible, pour être avantageusement utilisée dans un autre dispositif (non représenté) de la chaîne de montage, analogue au dispositif 1.

Le serveur web 44 est connecté à une interface de communication 43. Cette interface de communication 43 permet de contacter le serveur web 44 par l'intermédiaire de connexions 431 diverses. Selon l'invention, le dispositif 1 possède au moins une connexion 431 comme par exemple : Ethernet (RJ45), USB (en anglais *Universal Serial Bus*), M8, des connexions sans fil wifi et Bluetooth®...

La carte électronique 4 est par exemple alimentée électriquement par une source externe (non représentée). Lorsque l'adaptateur 2 est déconnecté de la machine 3, la carte électronique 4 est alimentée électriquement par une des connexions 431 filaires ou par un câble électrique dédié (non représenté). Lorsque l'adaptateur 2 est relié à la machine 3, la carte électronique 4 est alimentée électriquement par la machine 3 à travers une gaine 31.

La gaine 31 est un faisceau de conduits fluidiques et de câbles électriques reliant l'adaptateur 2 à la machine de remplissage 3 et assurant une liaison électrique mais également une liaison informatique 71 pour les transferts de données.

Grâce aux connexions 431, des dispositifs d'affichage 6 ou 32 se connectent au serveur web 44 du dispositif 1 avec son URL et affichent la page web 5.

Les dispositifs d'affichage 6 sont par exemple des ordinateurs, des tablettes utilisant un navigateur web/internet, ou tout logiciel capable d'exploiter les données contenues dans le serveur web 44 et permettant d'afficher la page 5, et au moins une connexion 431.

Les dispositifs d'affichage 32 sont par exemple des consoles de maintenance ou des consoles de commande de la machine de remplissage 3.

Lorsque la machine de remplissage 3 est connectée à un réseau de données 7, par exemple de type intranet, d'autres dispositifs d'affichage 6' connectés au réseau de données 7 peuvent joindre le serveur web 44 et afficher la page web 5. Le dispositif 1 peut aussi se connecter au réseau de données 7 par l'intermédiaire d'une connexion sans fil de type wifi.

En l'absence de connexion au réseau local de données 7, un routeur 73 GSM (en anglais *Global System for Mobile Communications*) utilisant une des normes courantes de communication de données (Edge, 3G, 4G) permet aux dispositifs d'affichage 6, 6' de communiquer avec le dispositif 1 à travers les réseaux de communications mobiles et internet.

La page web 5 affiche d'une part les informations recueillies localement, c'est-à-dire par le module de détection 41 et le module de calcul 42, ou par le serveur web 44, telles que des informations d'horodatage, et d'autre part des informations enregistrées provenant de sources externes.

Les informations enregistrées sont par exemple des jalons de maintenance préconisés par le fabricant de l'adaptateur 2, des listes d'actions à prévoir et les consommables nécessaires lors de la réalisation d'une maintenance, des documents techniques (schémas, nomenclature, notice de montage/démontage), des guides pour la réalisation de la maintenance ou pour l'utilisation de l'adaptateur 2... etc.

Une base documentaire est donc enregistrée localement sur le serveur web 44 dans la mémoire 441.

Les sources externes sont des dispositifs d'affichages 6, 6' et 32 qui possèdent des moyens de saisie et d'enregistrement dans la page web 5.

Le système 100 comprend le cas échéant une multitude de dispositifs (non représentés) analogues au dispositif 1, qui peuvent être adressés par leurs adresses URL respectives au travers de réseaux de données locaux 7, internet 72 ou mobiles 73. Ces différents réseaux sont interconnectables.

Le serveur de réseau 8 est connecté à une base de données 9 et permet de télédistribuer aux serveurs web 44 des informations, notamment des documents techniques, les jalons de maintenance. Ces informations sont enregistrées dans la mémoire 441 et accessibles par la page web 5. Dans le cas d'une mémoire 441 insuffisante, seuls les liens internet vers ces informations sont télédistribués.

Le serveur de réseau 8 peut récupérer à partir des serveurs web 44 des informations notamment des logs d'utilisations, des paramètres d'utilisation cumulée, des indications sur la réalisation des maintenances, des horodatages de ces utilisations.

Le serveur de réseau 8 de données permet également superviser le dispositif 1 et les autres dispositifs analogues en récupérant les informations d'utilisation qu'ils contiennent.

Selon une variante déjà mentionnée, le serveur de réseau 8 utilise lui-même les données des modules de détection 41 pour calculer le paramètre représentatif de l'utilisation cumulée de l'adaptateur 2.

Dans l'exemple représenté, le serveur de réseau 8 utilise simplement les données des modules de calcul 42.

Avec ces informations, la planification de la maintenance de l'adaptateur 2 ou de la machine 3 est facilitée. En fonction de la remontée des paramètres d'utilisation vers le serveur de réseau 8, des alertes d'utilisation peuvent aussi être déclenchées au niveau du serveur de réseau 8. Ces alertes peuvent prendre la forme d'envoi de messages à l'attention des opérateurs, du fournisseur à travers le réseau de données 7, 72 ou une forme plus graphique et visuelle sur le serveur 8 et les dispositifs d'affichage 6 et 6'. Un opérateur administrant le serveur de réseau 8 peut ainsi être alerté de l'achèvement de jalons de maintenance sur le dispositif 1 et engager les opérations de maintenance préconisées.

Le dispositif 1 comptabilise les cycles d'utilisation de l'adaptateur 2 à chaque fois que l'opérateur appuie sur le bouton démarrage, puis sur ce même bouton ou un bouton arrêt pour clore le cycle de remplissage ou de test du récipient. Au bout d'un certain nombre de cycles d'utilisation, un voyant indique l'échéance d'un jalon de maintenance préalablement renseigné dans le dispositif 1. L'opérateur de maintenance se connecte au serveur web 44 via son adresse URL et en utilisant un des dispositifs d'affichage 6, 6', 32.

Le navigateur internet affiche la page web 5, qui présente par exemple les informations recueillies sur l'utilisation de l'adaptateur 2 (nombre de cycles, dates d'utilisation, durées...), les différents jalons des maintenances renseignés dans le dispositif, les actions à mener pour la maintenance en cours, le manuel de la maintenance ou toutes informations qui pourraient être utilisées par l'opérateur de maintenance.

L'opérateur a la possibilité de valider sur la page web 5 les actions de maintenance qu'il a réalisées et met donc à jour les informations contenues dans le dispositif 1 de l'adaptateur 2. La date, l'heure, ainsi que le nombre total de cycles effectués par l'adaptateur 2 au moment de la maintenance sont par exemple enregistrés dans un rapport sur la page web 5. Un compteur d'utilisation peut être mis à zéro à la fin de la maintenance, tandis qu'un autre compteur indique les cycles d'utilisation en continu.

Si l'opérateur de maintenance doit débrancher l'adaptateur 2 de la gaine 31, l'opérateur a à sa disposition la connexion 431 pour se connecter au serveur web 44 et afficher la page web 5. Au besoin, l'opérateur peut alimenter électriquement le dispositif 1 via une prise dédiée. L'information recueillie ou enregistrée concernant l'adaptateur 2 reste disponible et à jour, car elle est enregistrée dans le dispositif 1 lui-même, situé dans l'adaptateur 2 (ou en variante dans la machine 3).

En cas d'avarie non réparable de l'adaptateur 2, le dispositif 1 peut être déplacé dans un autre adaptateur. Les données du précédent adaptateur sont effacées de la mémoire 441 pour être remplacées par celles du nouvel adaptateur.

Si le dispositif 1 est endommagé, un nouveau dispositif analogue est inséré dans l'adaptateur 2. Pour permettre un suivi de la maintenance de cet adaptateur, la mémoire amovible 441 est déplacée de l'ancien dispositif 1 dans le nouveau dispositif. Ceci permet une portabilité des données de maintenance.

Selon un autre exemple de réalisation de l'invention, le serveur web 44 est capable de générer des messages d'information, tels que des courriers électroniques, vers des adresses prédéfinies. Ces messages ont pour but notamment d'alerter de l'échéance d'un jalon de maintenance de la machine de remplissage (3) ou de l'adaptateur (2) ou d'établir des rapports de maintenance.

Grâce aux caractéristiques décrites ci-dessus, la gestion de la maintenance est grandement simplifiée. La mise à jour des procédures et le suivi des étapes de maintenance l'est également.

## Revendications

1. Machine (3) de remplissage ou de test d'un récipient, ou adaptateur (2) pour connecter la machine (3) au récipient, comprenant un dispositif (1) de gestion de maintenance, intégré dans la machine (3) de remplissage ou de test d'un récipient, ou dans l'adaptateur (2) pour connecter la machine (3) au récipient, en particulier sur une chaîne de fabrication automobile, le dispositif (1) comprenant :
- un module de détection (41) adapté pour détecter un déclenchement et/ou un arrêt de l'adaptateur (2) ou de la machine (3),
- une interface de communication (43), et
- un serveur (44) web hébergeant au moins une page web (5) accessible via l'interface de communication (43) et adaptée pour afficher au moins un paramètre représentatif d'une utilisation cumulée de l'adaptateur (2) ou de la machine (3), le paramètre étant destiné à être calculé par un module de calcul (42) connecté au module de détection (41).

2. Machine (3) ou adaptateur (2) selon la revendication 1, dans laquelle ou dans lequel le serveur web (44) comprend une mémoire (441), de préférence amovible, apte à stocker des données représentative d'une utilisation de l'adaptateur (2) ou de la machine (3).

3. Machine (3) ou adaptateur (2) selon la revendication 2, dans laquelle ou dans lequel le paramètre est représentatif d'un nombre d'utilisations ou d'une durée d'utilisation cumulée de l'adaptateur (2) ou de la machine (3).

4. Machine (3) ou adaptateur (2) selon l'une quelconque des revendications 1 à 3, dans laquelle ou dans lequel l'interface de communication (43) est adaptée pour communiquer avec des dispositifs d'affichage (6) lorsque l'adaptateur (2) n'est pas connecté à la machine (3).

5. Machine (3) ou adaptateur (2) selon l'une quelconque des revendications 1 à 3, dans laquelle ou dans lequel l'interface de communication (43) est adaptée pour communiquer avec des dispositifs d'affichage (6', 32) à travers un réseau de données (7, 72) lorsque l'adaptateur (2) est connecté à la machine (3).

6. Machine (3) ou adaptateur (2) selon l'une quelconque des revendications 1 à 5, le dispositif (1) comprenant en outre une carte électronique (4) incluant :
- le serveur web (44), et
- de préférence le module de détection (41) et le module de calcul (42).

7. Système (100) de gestion de maintenance comprenant :
- au moins une machine (3) ou un adaptateur (2) selon l'une quelconque des revendications 1 à 6,
- un réseau de données (7, 72) connecté au dispositif (1),
- un serveur de réseau (8) apte à récupérer des données contenues dans le serveur web (44) et à transmettre des données au serveur web (44) via le réseau de communication (7, 72), et
- une base de données (9) apte à être interrogée par le serveur de réseau (8) ou le serveur web (44), la base de données (9) contenant notamment des documentations techniques, des listes de tâches de maintenance de l'adaptateur (2) ou de la machine (3), et lesdites données récupérées par le serveur de réseau (8).

8. Système (100) selon la revendication 7, comprenant en outre le module de calcul (42), le module de calcul (42) étant situé dans le dispositif (1), dans le serveur de réseau (8) ou les dispositifs d'affichage (6, 6').

9. Procédé de gestion de maintenance d'une machine (3) de remplissage ou de test d'un récipient, ou d'un adaptateur (2) connectant la machine (3) au récipient, en particulier sur une chaîne de fabrication automobile, le procédé mettant en oeuvre un dispositif (1) selon l'une quelconque des revendications 1 à 6, et comprenant les étapes suivantes :
- recueil par le serveur web (44) du paramètre en provenance du module de calcul (42) et chargement du paramètre sur la page web (5),
- affichage de la page web (5),
- fourniture à un opérateur, sur la page web (5) affichée, du paramètre et d'une liste de tâches de maintenance recommandées en fonction du paramètre, et
- validation par l'opérateur sur la page web (5) d'une liste de tâches de maintenance effectuées.
